# EUROPÄISCHE PATENTANMELDUNG

(11) **EP 1 327 595 A1**
(43) Veröffentlichungstag der Anmeldung: **16.07.2003**
(21) Anmeldenummer: 02000737.3
(22) Anmeldetag: 12.01.2002
(51) Int. Cl.: B65H 39/00, B65G 61/00

(54) **Verfahren zur automatischen Bildung von verschickbaren Paketen von Druckerzeugnissen und Vorrichtung zur Durchführung des Verfahrens**

(71) Anmelder: Segbert GmbH & Co. Kommanditgesellschaft, 48683 Ahaus (DE)
(72) Erfinder: Segbert Stephan, 48619 Heek (DE)
(74) Vertreter: Rohmann, Michael, Dr.

(57) **Zusammenfassung**

Verfahren zur automatischen Bildung von verschickbaren Paketen von Druckerzeugnissen und zum Palettieren dieser Pakete. Die Druckerzeugnisse werden einer Paketbildungseinrichtung (5) fortlaufend zugeführt. In der Paketbildungseinrichtung (5) werden in Abhängigkeit von der von einer Steuer- und/oder Regeleinrichtung zugeführten Signalen jeweils eine bestimmte Anzahl von Druckerzeugnissen, insbesondere für denselben Zielort bestimmte Druckerzeugnisse, in einem Paket zusammengefasst. Die Reihenfolge der zu bildenden Pakete und/oder die Anzahl der Druckerzeugnisse für die jeweils zu bildenden Pakete wird mit der Maßgabe gewählt, dass jeweils aus einer Mehzahl der erzeugten und nacheinander aus der Paketbildungseinrichtung (5) abgeführten Pakete Stapel gleicher Höhe gebildet werden und wobei die Stapel gleicher Höhe zu einer Stapelschicht auf einer Palette abgelegt werden.

## Beschreibung

Die Erfindung betrifft ein Verfahren zur automatischen Bildung von verschickbaren Paketen von Druckerzeugnissen und zum Palettieren dieser Pakete. - Druckerzeugnisse meint im Rahmen der Erfindung insbesondere Zeitschriften, Kataloge, Prospekte u. dgl.. Nach dem Drucken werden diese Druckerzeugnisse für den Transport bzw. für den Versand zu Paketen zusammengefasst. Normalerweise werden die zu versendenden bzw. zu verschickenden Druckerzeugnisse, die für einen Zielort oder für eine Zielregion bestimmt sind, in einem Paket zusammengefasst. Es ist fernerhin üblich, die für den Transport bzw. für den Versand bestimmten Pakete auf Paletten abzulegen.

Bei den aus der Praxis bekannten Maßnahmen der vorstehend erläuterten Art haben die aus den Druckerzeugnissen gebildeten Pakete aufgrund des unterschiedlichen Bestimmungsortes häufig auch eine unterschiedliche Dicke. Eine Stapelung bzw. Palettierung (Ablegen auf einer Palette) solcher Pakete unterschiedlicher Dicke ist problematisch. Ein effektives Palettieren dieser Pakete ist nur mit aufwendigen Zusatzmaßnahmen durchführbar.

Der Erfindung liegt demgegenüber das technische Problem zugrunde, ein Verfahren anzugeben, mit dem aus Druckerzeugnissen, die für unterschiedliche Zielorte bestimmt sind, auf einfache Weise verschickbare Pakete gebildet werden können, die effektiv und auf wenig aufwendige Weise auf einer Palette palettiert werden können. Außerdem liegt der Erfindung das technische Problem zugrunde, eine Vorrichtung zur Durchführung eines solchen Verfahrens anzugeben.

Zur Lösung dieses technischen Problems lehrt die Erfindung ein Verfahren zur automatischen Bildung von verschickbaren Paketen von Druckerzeugnissen und zum Palettieren dieser Pakete,
wobei die Druckerzeugnisse einer Paketbildungseinrichtung fortlaufend zugeführt werden,
wobei in der Paketbildungseinrichtung in Abhängigkeit von den von einer Steuer- und/oder Regeleinrichtung zugeführten Signalen jeweils eine bestimmte Anzahl von Druckerzeugnissen, insbesondere für denselben Zielort bestimmte Druckerzeugnisse, in einem Paket zusammengefasst werden,
und wobei die Reihenfolge der zu bildenden Pakete und/oder die Anzahl der Druckerzeugnisse für die jeweils zu bildenden Pakete mit der Maßgabe gewählt wird, dass jeweils aus einer Mehrzahl der erzeugten und nacheinander aus der Paketbildungseinrichtung abgeführten Pakete Stapel gleicher Höhe gebildet werden und wobei die Stapel gleicher Höhe zu einer Stapelschicht auf einer Palette abgelegt werden.

Automatische Bildung von verschickbaren Paketen meint im Rahmen der Erfindung, dass die fortlaufend zugeführten Druckerzeugnisse vollautomatisch und ohne manuelle Hilfe oder zumindest weitgehend ohne manuelle Hilfe zu den verschickbaren Paketen zusammengefasst werden. Fortlaufende Zuführung meint im Rahmen der Erfindung, dass die Druckerzeugnisse kontinuierlich oder taktweise zugeführt werden. Für denselben Zielort bestimmte Druckerzeugnisse meint im Rahmen der Erfindung auch für dieselbe Zielregion bestimmte Druckerzeugnisse. - Dass Stapel gleicher Höhe gebildet werden, meint im Rahmen der Erfindung auch, dass die Stapel im Wesentlichen die gleiche Höhe aufweisen. Natürlich sind hier geringe Toleranzen zulässig.

Es liegt im Rahmen der Erfindung, dass von der Steuerund/oder Regeleinrichtung Steuer- und/oder Regelsignale ausgehen und dass in der Paketbildungseinrichtung in Abhängigkeit von diesen Signalen jeweils eine bestimmte Anzahl der Druckerzeugnisse zu einem Paket zusammengefasst wird, wobei ein solches Paket zweckmäßigerweise Druckerzeugnisse enthält, die für denselben Zielort bzw. für dieselbe Zielregion bestimmt sind. Die Steuer- und/oder Regeleinrichtung ist bevorzugt als Steuer- und/oder Barcode-Regeleinrichtung ausgebildet und weist vorzugsweise zumindest einen Mikroprozessor auf. Bei der Paketbildung findet erfindungsgemäß eine Vorsortierung statt. Die Vorsortierung wird mit der Maßgabe vorgenommen, dass die Anzahl der Druckerzeugnisse für die jeweils zu bildenden Pakete und auch die Reihenfolge der nacheinander gebildeten Pakete so gewählt bzw. so eingestellt wird, dass aus unmittelbar nacheinander erzeugten Paketen Stapel gleicher Höhe gebildet werden können. Diese Stapel gleicher Höhe können dann auf einer Palette zu einer Stapelschicht abgelegt werden, die eine gleichmäßige horizontale Oberfläche aufweist, so dass darauf bei Bedarf eine weitere Stapelschicht abgelegt werden kann.

Mit der Steuer- und/oder Regeleinrichtung wird die Paketbildungseinrichtung so gesteuert und/oder geregelt, dass die Reihenfolge der gebildeten Pakete und zweckmäßigerweise die Anzahl der Druckerzeugnisse für ein jeweils zu bildendes Paket mit der Maßgabe eingestellt wird, dass aus unmittelbar nacheinander erzeugten Paketen Stapel gleicher Höhe gebildet werden können. Fernerhin wird mit der Steuer- und/oder Regeleinrichtung die Stapelbildungseinrichtung mit der Maßgabe gesteuert und/oder geregelt, dass in der Stapelbildungseinrichtung nacheinander Stapel gleicher Höhe gebildet werden. Die Bildung von Stapeln gleicher Höhe bezieht sich dabei zunächst auf eine auf einer Palette zu bildende Stapelschicht. Mit anderen Worten kann mit der Spapelbildungseinrichtung grundsätzlich auch zuerst eine Mehrzahl von Stapeln einer ersten Höhe für eine erste Stapelschicht einer Palette gebildet werden und im Anschluss daran eine Mehrzahl von Stapeln einer zweiten Höhe für eine zweite Stapelschicht einer Palette gebildet werden. Vorzugsweise werden mit der erfindungsgemäßen Stapelbildungseinrichtung im Zuge des Beladens einer Palette aber stets Stapel gleicher Höhe gebildet.

Es liegt im Rahmen der Erfindung, dass in einem Mikroprozessor der Steuer- und/oder Regeleinrichtung Daten abgespeichert sind, die insbesondere die Anzahl der Druckerzeugnisse, die für einen bestimmten Zielort bestimmt sind, betreffen und dass diese Daten mit der Maßgabe verarbeitet werden, dass der Paketbildungseinrichtung Steuer- und/oder Regelsignale zugeführt werden, die die vorstehend beschriebene erfindungsgemäße Bildung der Pakete veranlassen. In der Paketbildungseinrichtung werden Pakete mit variierender Dicke gebildet und oftmals werden dabei nacheinander Pakete unterschiedlicher Dicke hergestellt. Die Paletten werden erfindungsgemäß in einer Reihenfolge gebildet, die es erlaubt, stets Stapel gleicher Höhe zu bilden, welche Stapel in einer Stapelschicht mit konstanter Höhe auf einer Palette abgelegt werden können.

Es liegt im Rahmen der Erfindung, dass jedes einzelne Druckerzeugnis automatisch mit einem Label versehen wird, auf welches Label der Zielort aufgedruckt wird. Aufdrucken des Zielortes meint auch, dass der Zielort bzw. die Zielregion in Form eines Codes oder Strichcodes aufgedruckt werden kann. Vorzugsweise wird auf der Oberseite eines Paketes ein Deckblatt aufgebracht, auf welchem Deckblatt zweckmäßigerweise der Zielort bzw. die Zielregion aufgedruckt wird. Nach bevorzugter Ausführungsform der Erfindung wird ein aus der Paketbildungseinrichtung abgeführtes Paket verblockt. Unter Verblocken versteht man das elektrostatische Aufladen der Pakete. Durch dieses Verblocken bzw. Aufladen wird ein Auseinanderfallen der Pakete bei der weiteren Handhabung verhindert, weil die Druckerzeugnisse aufgrund der elektrostatischen Aufladung aneinander haften. - Nach sehr bevorzugter Ausführungsform der Erfindung wird ein aus der Paketbildungseinrichtung abgeführtes Paket in eine Folie eingeschrumpft. Zweckmäßigerweise handelt es sich dabei um ein vorher verblocktes Paket (gebündelt oder folienumreift).

Gegenstand der Erfindung ist auch eine Vorrichtung zur Durchführung des erfindungsgemäßen Verfahrens, wobei eine Steuer- und/oder Regeleinrichtung mit zumindest einem Mikroprozessor vorgesehen ist,
wobei eine Paketbildungseinrichtung mit einem Kreuzleger vorhanden ist, mit welchem Kreuzleger Druckerzeugnisse insbesondere für denselben Zielort bestimmte Druckerzeugnisse zu einem Paket zusammenfassbar sind,
wobei eine Stapelbildungseinrichtung vorgesehen ist, mit der aus den Paketen Stapel gleicher Höhe erzeugbar sind,
und wobei an die Stapelbildungseinrichtung ein Palettierer anschließt, mit dem die Stapel zu einer Stapelschicht auf einer Palette ablegbar sind. - Palettierer meint eine Palettierungsvorrichtung zum Beladen von Paletten.

Wie oben bereits erläutert, liegt es im Rahmen der Erfindung, dass in dem Mikroprozessor der Steuer- und/oder Regeleinrichtung Daten über die Bestimmungsorte (Zielorte bzw. Zielregionen) der Druckerzeugnisse abgespeichert sind. Mit Hilfe dieser Daten wird die Vorrichtung durch die Steuer- und/oder Regeleinrichtung so gesteuert bzw. geregelt, dass nacheinander Pakete mit Druckerzeugnissen für den gleichen Zielort bzw. für die gleiche Zielregion erzeugt werden und zwar mit der Maßgabe, dass mit diesen nacheinander gebildeten Paketen Stapel gleicher Höhe erzeugbar sind, welche Stapel wiederum auf einer Palette so ablegbar sind, dass eine Stapelschicht mit gleichmäßiger horizontaler Oberfläche entsteht. Es liegt im Rahmen der Erfindung, dass ein Stapel eine Mehrzahl von Paketen mit Druckerzeugnissen enthält. Grundsätzlich liegt es aber auch im Rahmen der Erfindung, dass ein Stapel nur aus einem einzigen Paket mit Druckerzeugnissen bestehen kann. - Die erfindungsgemäße Vorsortierung der Druckerzeugnisse findet zweckmäßigerweise in Abhängigkeit von der Postanschrift, d. h. beispielsweise in Abhängigkeit von der Postleitzahl statt.

Es liegt im Rahmen der Erfindung, dass die Druckerzeugnisse der Paketbildungseinrichtung fortlaufend und einzeln zugeführt werden. Nach bevorzugter Ausführungsform der Erfindung ist der Paketbildungseinrichtung eine Vereinzelungsvorrichtung vorgeschaltet, mit welcher Vereinzelungsvorrichtung zwischen den einzelnen zugeführten Druckerzeugnissen jeweils gleiche konstante Abstände einrichtbar sind.

Vorzugsweise weist die erfindungsgemäße Vorrichtung eine Etikettiereinrichtung auf, mit der jeweils ein Label auf einem einzelnen Druckerzeugnis aufgebracht wird. Das Aufbringen des Labels erfolgt zweckmäßigerweise durch Aufkleben. Das Label dient insbesondere zum Aufdrucken der Postanschrift. So kann der Zielort bzw. die Zielregion auf dem Label aufgedruckt werden.

Nach bevorzugter Ausführungsform der Erfindung ist dem Kreuzleger zumindest eine Druckeinrichtung vorgeschaltet, mit welcher Druckeinrichtung ein auf einem einzelnen Druckerzeugnis aufgebrachtes Label bedruckbar ist und/oder mit der ein auf der Oberseite eines Paketes aufzubringendes Deckblatt bedruckbar ist. Zweckmäßigerweise wird auf dem Label und/oder dem Deckblatt die Anschrift bzw. der Zielort aufgedruckt. Es liegt auch im Rahmen der Erfindung, dass eine erste Druckeinrichtung zum Bedrucken eines auf einem einzelnen Druckerzeugnis aufgebrachten Labels vorgesehen ist und dass zusätzlich eine zweite Druckeinrichtung vorgesehen ist, mit der ein auf der Oberseite eines Paketes aufzubringendes Deckblatt bedruckbar ist.

Die Paketbildungseinrichtung mit dem Kreuzleger arbeitet in an sich bekannter Weise. Vorzugsweise werden aus einer Mehrzahl der einzeln zugeführten Druckerzeugnisse zunächst Primärstapel gebildet. Ein solcher Primärstapel wird dann auf einen Pakettisch abgeworfen, auf dem die eigentliche Paketbildung erfolgt. Eine Mehrzahl von Primärstapeln wird hier zu einem Paket zusammengefasst. Vorzugsweise wird der Pakettisch vor der Aufnahme jedes weiteren Primärstapels um 180° gedreht wird. Zweckmäßigerweise werden die Primärstapel auf dem Pakettisch abgepresst. Anschließend verlassen die fertigen Pakete den Pakettisch und werden weiter befördert.

Es liegt im Rahmen der Erfindung, dass der Paketbildungseinrichtung bzw. dem Kreuzleger eine Verblockungseinrichtung zum Verblocken der Pakete nachgeschaltet ist. Es wurde oben bereits erläutert, dass in der Verblockungseinrichtung ein elektrostatisches Aufladen der Pakete bzw. der Druckerzeugnisse stattfindet. Dieses elektrostatische Aufladen bewirkt, dass die Druckerzeugnisse fest aneinander haften und bei der weiteren Behandlung nicht auseinanderfallen können. - Zweckmäßigerweise ist der Paketbildungseinrichtung bzw. dem Kreuzleger eine Schrumpfvorrichtung oder eine Umreifungseinrichtung nachgeschaltet. Mit der Schrumpfvorrichtung sind die Pakete jeweils in eine Folie einschrumpfbar. Mit der Umreifungseinrichtung können die Pakete jeweils querumreift werden. Vorzugsweise ist zunächst eine Folienmaschine vorgesehen, in der die einzelnen Pakete jeweils in eine Kunststofffolie eingewickelt werden. Anschließend werden die Pakete mit der Kunststofffolie durch einen Schrumpftunnel befördert, in dem die Folie auf dem Paket gleichsam aufgeschrumpft wird.

Der Erfindung liegt die Erkenntnis zugrunde, dass mit dem erfindungsgemäßen Verfahren bzw. mit der erfindungsgemäßen Vorrichtung eine einfache Bildung verschickbarer Pakete von Druckerzeugnissen möglich ist, welche Pakete anschließend auf wenig aufwendige Weise platzsparend auf einer Palette abgelegt werden können. Außerdem arbeitet die erfindungsgemäße Vorrichtung nichtsdestoweniger sehr zuverlässig und präzise. Fernerhin ist ein sehr zügiges Arbeiten mit hoher Taktzahl möglich. Als besonderer Vorteil ist auch hervorzuheben, dass die erfindungsgemäße Vorrichtung mit relativ geringem Kostenaufwand realisierbar ist. Bestehende Paketbildungsanlagen bzw. Palettierungsanlagen können auf relativ einfache Weise zu einer erfindungsgemäßen Vorrichtung umgerüstet bzw. nachgerüstet werden.

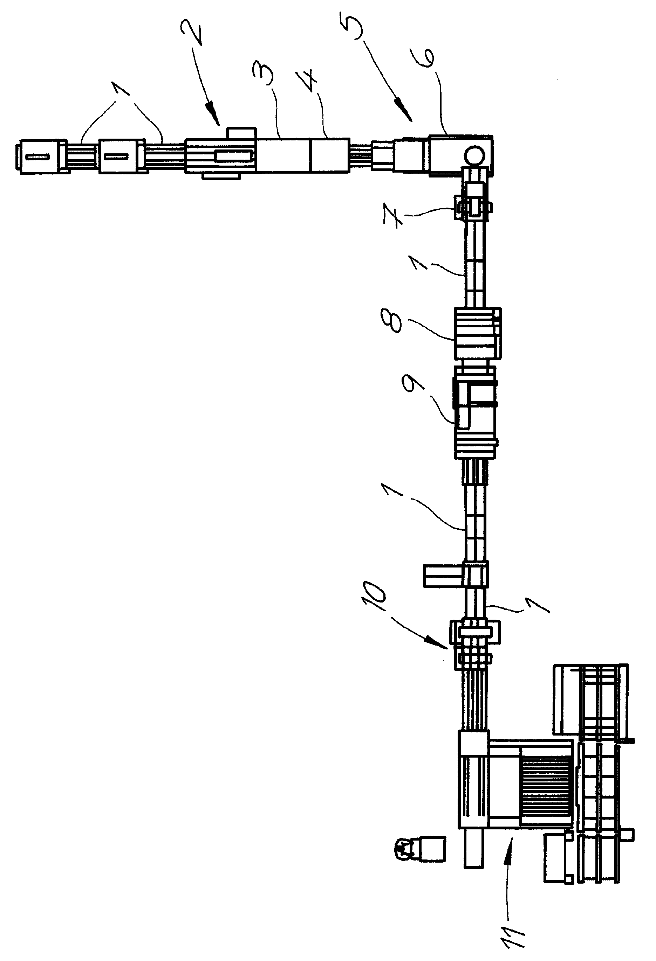

Nachfolgend wird die Erfindung anhand einer lediglich ein Ausführungsbeispiel darstellenden Zeichnung näher erläutert. Die einzige Figur zeigt ein Schema einer erfindungsgemäßen Vorrichtung.

Die einzelnen nicht näher dargestellten Druckerzeugnisse werden über Förderbänder 1 einer Vereinzelungsvorrichtung 2 zugeführt. Hier werden zwischen den einzelnen zugeführten Druckerzeugnissen jeweils gleiche konstante Abstände eingestellt. Vorzugsweise und im Ausführungsbeispiel ist in die Vereinzelungsvorrichtung 2 eine Adressiereinrichtung integriert, mit der jeweils ein Etikett bzw. ein Label auf einem einzelnen Druckerzeugnis oder Bund aufgebracht wird. Die Druckerzeugnisse werden dann durch eine Druckeinrichtung 3 geführt, in welcher Druckeinrichtung 3 die auf den einzelnen Druckerzeugnissen aufgebrachten Labels bedruckbar sind. An die Druckeinrichtung 3 schließt ein Deckblattdrucker 4 an. In diesem Deckblattdrucker 4 werden Deckblätter bedruckt, die jeweils auf die Oberseite eines fertigen Paketes aufgebracht werden. Dementsprechend werden Deckblätter nur in bestimmten Abständen bzw. nach einer bestimmten Anzahl durchgelaufener Druckerzeugnisse gedruckt und ausgegeben.

Im Anschluss an den Deckblattdrucker 4 laufen die Druckerzeugnisse in die Paketbildungseinrichtung 5 ein, die einen Kreuzleger 6 aufweist. In dem Kreuzleger 6 werden die Pakete jeweils aus einer Mehrzahl von Druckerzeugnissen gebildet. Die den Kreuzleger verlassenden fertigen Pakete werden anschließend zweckmäßigerweise und im Ausführungsbeispiel in eine Verblockungseinrichtung 7 überführt, in der die Pakete verblockt, d. h. elektrostatisch aufgeladen werden.

Anschließend werden die verblockten Pakete in eine Folienmaschine 8 eingeführt, in der die Pakete in eine Kunststofffolie eingewickelt werden. Der Folienmaschine 8 ist ein Schrumpftunnel 9 nachgeschaltet, in dem die Kunststofffolie auf das Paket aufgeschrumpft wird, so dass das Paket von der Kunststofffolie fest umfasst wird.

Im Anschluss an den Schrumpftunnel 9 laufen die Pakete in die Stapelbildungseinrichtung 10 ein, in der aus den Paketen Stapel gleicher Höhe gebildet werden. Der Stapelbildungseinrichtung 10 werden dazu von der nicht dargestellten Steuer- und/oder Regeleinrichtung Signale übermittelt, aufgrund derer die Stapelbildungseinrichtung 10 Stapel vorgegebener Höhe bildet. In der Stapelbildungseinrichtung 10 ist zweckmäßigerweise eine nicht dargestellte Höhenmesseinrichtung zur Kontrolle vorgesehen, mit der die Höhe der gebildeten Stapel zusätzlich überprüft wird.

Die die Stapelbildungseinrichtung 10 verlassenden Stapel, die in der Regel aus einer Mehrzahl von Paketen bestehen, werden dann zum Palettierer 11 überführt. Hier werden die Stapel auf einer Palette abgelegt, so dass auf der Palette jeweils Stapelschichten aus Stapeln gleicher Höhe gebildet werden.

## Patentansprüche

**1.** Verfahren zur automatischen Bildung von verschickbaren Paketen von Druckerzeugnissen und zum Palettieren dieser Pakete,
wobei die Druckerzeugnisse einer Paketbildungseinrichtung fortlaufend zugeführt werden,
wobei in der Paketbildungseinrichtung in Abhängigkeit von den von einer Steuer- und/oder Regeleinrichtung zugeführten Signalen jeweils eine bestimmte Anzahl von Druckerzeugnissen, insbesondere für denselben Zielort bestimmte Druckerzeugnisse, in einem Paket zusammengefasst werden,
und wobei die Reihenfolge der zu bildenden Pakete und/oder die Anzahl der Druckerzeugnisse für die jeweils zu bildenden Pakete mit der Maßgabe gewählt wird, dass jeweils aus einer Mehrzahl der erzeugten und nacheinander aus der Paketbildungseinrichtung abgeführten Pakete Stapel gleicher Höhe gebildet werden und wobei die Stapel gleicher Höhe zu einer Stapelschicht auf einer Palette abgelegt werden.

**2.** Verfahren nach Anspruch 1, wobei jedes einzelne Druckerzeugnis automatisch mit einem Label versehen wird, auf welches Label der Zielort aufgedruckt wird.

**3.** Verfahren nach einem der Ansprüche 1 oder 2, wobei auf der Oberseite eines Paketes ein Deckblatt aufgebracht wird, auf welchem Deckblatt der Zielort aufgedruckt wird.

**4.** Verfahren nach einem der Ansprüche 1 bis 3, wobei ein aus der Paketbildungseinrichtung (5) abgeführtes Paket in eine Folie eingeschrumpft wird oder umreift wird.

**6.** Vorrichtung zur Durchführung des Verfahrens nach einem der Ansprüche 1 bis 5,
wobei eine Steuer- und/oder Regeleinrichtung mit zumindest einem Mikroprozessor vorgesehen ist,
wobei eine Paketbildungseinrichtung (5) mit einem Kreuzleger (6) vorhanden ist, mit welchem Kreuzleger (6) Druckerzeugnisse, insbesondere für denselben Zielort bestimmte Druckerzeugnisse, zu einem Paket zusammenfassbar sind,
wobei eine Stapelbildungseinrichtung (10) vorgesehen ist, mit der aus den Paketen Stapel gleicher Höhe erzeugbar sind,
und wobei an die Stapelbildungseinrichtung (10) ein Palettierer (11) anschließt, mit dem die Stapel zu einer Stapelschicht auf einer Palette ablegbar sind.

**7.** Vorrichtung nach Anspruch 6, wobei der Paketbildungseinrichtung (5) eine Vereinzelungsvorrichtung (2) vorgeschaltet ist, mit welcher Vereinzelungsvorrichtung (2) zwischen den einzelnen zugeführten Druckerzeugnissen gleiche konstante Abstände einrichtbar sind.

**8.** Vorrichtung nach einem der Ansprüche 6 bis 7, wobei eine Adressiereinrichtung vorgesehen ist, mit der jeweils ein Label auf einem einzelnen Druckerzeugnis aufbringbar ist.

**9.** Vorrichtung nach einem der Ansprüche 6 bis 8, wobei dem Kreuzleger (6) zumindest eine Druckeinrichtung (3) vorgeschaltet ist, mit welcher Druckeinrichtung (3) ein auf einem einzelnen Druckerzeugnis aufgebrachtes Label bedruckbar ist und/oder mit der ein auf der Oberseite eines Paketes aufzubringenden Deckblatt bedruckbar ist.

**10.** Vorrichtung nach einem der Ansprüche 6 bis 9, wobei dem Kreuzleger (6) eine Verblockungseinrichtung (7) zum Verblocken der Pakete nachgeschaltet ist.

**11.** Vorrichtung nach einem der Ansprüche 6 bis 10, wobei dem Kreuzleger (6) eine Schrumpfvorrichtung nachgeschaltet ist, mit welcher Schrumpfvorrichtung die Pakete jeweils in eine Folie einschrumpfbar sind oder wobei dem Kreuzleger (6) eine Umreifungseinrichtung nachgeschaltet ist, mit welcher Umreifungseinrichtung die Pakete jeweils umreift werden.
